# EUROPÄISCHE PATENTANMELDUNG

(11) **EP 2 695 693 A1**
(43) Veröffentlichungstag der Anmeldung: **12.02.2014**
(21) Anmeldenummer: 12179981.1
(22) Anmeldetag: 10.08.2012
(51) Int. Cl.: B23K 1/00, B23K 1/14

(54) **Gelötete Dichtringe für Flugtriebwerke und Verfahren zu ihrer Herstellung**

(71) Anmelder: MTU Aero Engines AG, 80995 München (DE)
(72) Erfinder: Schneefeld, Dieter, 85253 Walkertshofen (DE); Knott, Ulrich, Dr., 80997 München (DE); Daniels, Bernd, 82194 Gröbenzell (DE)

(57) **Zusammenfassung**

Die vorliegende Erfindung betrifft einen Dichtring für ein Flugtriebwerk, der aus mehreren Blechen gebildet ist, die untereinander durch Löten verbunden sind und mindestens eine Lötverbindung aufweisen, die zwischen einem ersten Bauteil (12) und einem zweiten Bauteil (13) mit einem Lötspalt zwischen den Bauteilen ausgebildet wird, wobei sich der Lötspalt zumindest teilweise parallel zu den zu verbindenden Oberflächen der Bauteile erstreckt und durch Lot gefüllt wird, und wobei das Lot geschmolzen wird und wieder erstarrt und wobei der Lötspalt mindestens einen Bereich aufweist, in dem das geschmolzene Lot zuletzt erstarren und einen Bereich (18) mit erstarrter Restschmelze bilden wird, und wobei der Bereich mit erstarrter Restschmelze bestimmt wird und in dem bestimmten Bereich mit erstarrter Restschmelze ein Füllstoff (16) angeordnet wird.

## Beschreibung

### GEBIET DER ERFINDUNG

Die vorliegende Erfindung betrifft Dichtringe für ein Flugtriebwerk, die durch Löten aus mehreren Blechen hergestellt werden, sowie ein entsprechendes Verfahren zur Herstellung einer Lötverbindung und damit hergestellte Lötverbindungen.

### STAND DER TECHNIK

Dichtringe für Flugtriebwerke weisen üblicherweise geschmiedete oder stumpf geschweißte, massive Halte- und Trageringe auf, an denen eine Dichtstruktur, wie beispielweise ein gelötetes Wabenband angeordnet ist.

Der Nachteil derartiger Dichtringe liegt darin, dass sie ein hohes Gewicht aufweisen und durch die Verwendung von massiven Ringen für die Trag- und / oder Halterringe aufwändig und teuer in der Herstellung sind.

### OFFENBARUNG DER ERFINDUNG

### AUFGABE DER ERFINDUNG

Es ist deshalb Aufgabe der vorliegenden Erfindung, Dichtringe für Flugtriebwerke bereit zu stellen, die die Nachteile der Dichtringe aus dem Stand der Technik nicht aufweisen oder weitgehend vermeiden und insbesondere ein niedriges Gewicht besitzen und/oder einfach und kostengünstig herstellbar sind.

### TECHNISCHE ERLÖSUNG

Diese Aufgabe wird gelöst durch gelötete Dichtringe mit den Merkmalen des Anspruchs 12, wobei ein neues Verfahren zur Herstellung mindestens einer Lötverbindung eines gelöteten Dichtrings mit dem Merkmal des Anspruchs 1 sowie entsprechende Lötverbindungen mit den Merkmalen der Ansprüche 9 oder 10 bereit gestellt werden, um die erfindungsgemäße Lösung einer Herstellung der Dichtringe aus gelöteten Blechteilen zu realisieren. Vorteilhafte Ausgestaltungen sind Gegenstand der abhängigen Ansprüche.

Die vorliegende Erfindung zeichnet sich dadurch aus, dass die Dichtringe nicht mehr aus massiven, geschmiedeten und aus dem Vollmaterial gedrehten Ringen gebildet werden, sondern durch eine Blechkonstruktion ersetzt werden, bei der Blechteile durch Lötverbindungen zu einem entsprechenden Dichtring zusammengefügt werden.

Zusätzlich zeichnet sich die Erfindung dadurch aus, dass die Lötverbindungen zumindest teilweise nach einem neuen Verfahren hergestellt werden. Bei der Ausbildung entsprechender Lötverbindungen zur Herstellung der gelöteten Dichtringe hat sich nämlich gezeigt, dass bei sich aufweitenden Lötspalten das darin erstarrende Lot nicht mehr isotherm erstarrt, sondern eine Restschmelze bei niedrigeren Temperaturen erstarrt, was zur Segregation und insbesondere zur Anreicherung von hartstoffreichen Phasen in den Bereich der erstarrten Restschmelze führt.

Diesem Problem wird erfindungsgemäß dadurch begegnet, dass bei der Herstellung einer entsprechenden Lötverbindung ein Bereich identifiziert wird, in dem das geschmolzene Lot zuletzt erstarren und somit einen Bereich mit erstarrter Restschmelze Bilden wird, und dass in dem so identifizierten Bereich mit erstarrter Restschmelze ein Füllstoff angeordnet wird, um die Ausbildung eines entsprechenden Bereichs mit erstarrter Restschmelze weitgehend zu vermeiden oder zumindest zu verringern.

Aus dem Stand der Technik ist es zwar aus der WO2005/1182 A1 bzw. der DE 19 611 396 A1 bekannt, Einlagen in Lötverbindungen vorzusehen, jedoch nicht zum Zweck der Vermeidung von Segregationen und Bereichen mit erstarrten Restschmelzen.

Die DE 19 611 396 A1 verwendet partikelförmige Einlagen aus vorzugsweise keramischen Stoffen als Abstandshalter zwischen den zu verbindenden Teilen, so dass der Lötspalt bei der Herstellung nicht unter einen Mindestabstand verkleinert werden kann.

Die WO2005/1182 A1 beschreibt wiederum das Vorsehen von Einlagen in der Lötverbindung zur Einsparung von Lotwerkstoffen und zur Ausbildung von glatten Lötoberflächen, jedoch nur in Holkehlnähten mit kerbförmigen Fugen.

Demgegenüber schlägt die vorliegende Erfindung vor, bei Bauteilen, deren zu verbindende Oberflächen sich zumindest teilweise parallel zueinander erstrecken und einen Lötspalt zwischen sich ausbilden, der mit Lot gefüllt wird, in der Lötverbindung Bereiche zu identifizieren, in denen das geschmolzene Lot beim Erstarren zuletzt erstarren wird und somit einen Bereich mit erstarrten Restschmelze ausbilden wird. Nach Identifizierung eines oder mehrerer derartiger Bereiche in der zu erstellenden Lötverbindung wird bei der Ausbildung der Lötverbindung in dem oder den entsprechenden Bereichen ein Füllstoff angeordnet, um den Bereich mit erstarrter Restschmelze zu vermeiden bzw. zumindest zu verringern. Entsprechend findet sich in einer erfindungsgemäßen Lötverbindung kein Bereich mit erstarrter Restschmelze mehr oder geringe Restbereiche mit erstarrter Restschmelze umgeben den entsprechend eingelagerten Füllstoff zumindest partiell.

Die Bereiche, in denen die zeitlich verzögerte Erstarrung einer Restschmelze mit üblicherweise veränderter Zusammensetzung gegenüber den vorher erstarrten Lötbereichen erfolgt, können Bereiche sein, in denen die Lötspaltbreite größer ist als die bei der Lötverbindung überwiegend vorliegende Lötspaltbreite. Die überwiegend in der Lötverbindung vorliegende Lötspaltbreite wird definiert, als die Lötspaltbreite, die bei mehr als der Hälfte der Lötverbindung vorliegt bzw. unterschritten wird. Bereiche mit erstarrter Restschmelze können zudem auch in Bereichen mit einer Lötspaltbreite auftreten, die größer ist als eine benachbarte Lötspaltbreite. Entsprechend kann auch in diesen Bereichen ein Füllstoff vorgesehen werden.

Unter Lötspaltbreite wird allgemein der Abstand der zu verbindenden Oberflächen verstanden, wobei die Lötverbindung sich selbstverständlich dreidimensional erstrecken kann, also neben der Lötspaltbreite eine Länge und eine Dicke der Lötverbindung aufweist.

Der Füllstoff kann so dimensioniert werden, dass durch die Anordnung des Füllstoffs die verbleibende Breite des mit Lot gefüllten Lötspalts im Bereich des Füllstoffs im Wesentlichen gleich zu benachbarten Bereichen der Lötverbindung ist.

Außerdem kann die Dimensionierung des Füllstoffs so erfolgen, dass eine weitgehend isotherme Erstarrung des Lots ermöglicht wird und damit durch Vermeidung einer späteren Erstarrung von Teilen des Lots bei niedrigeren Temperaturen Segregationen entgegen gewirkt wird.

Der Füllstoff kann in Form eines massiven Fülldrahts, eines Drahtbündels oder eines Faserbündels in die Lötverbindung eingebracht werden.

Der Füllstoff kann ein metallischer Stoff sein, der insbesondere einen höheren Schmelzpunkt als das Lot aufweist, um ein Aufschmelzen des Füllstoffs während der Ausbildung der Lötverbindung zu vermeiden.

Der Füllstoff kann insbesondere in Aufweitungen des Lötspalts und vorzugsweise in den Bereichen angeordnet werden, in denen die Lötverbindung auf Zugbelastung beansprucht wird.

Der Füllstoff kann bei der Herstellung von Dichtringen für Flugtriebwerke im Bereich des Übergangs der Halteringe zu einem Tragring an einem Ende einer Lötverbindung zwischen Halte- und Tragring im Bereich einer ausgeweiteten Lötverbindung vorgesehen werden, da dadurch der Kraftfluss von den Halterring zu dem Tragring über Bereiche verläuft, in denen keine erstarrte Restschmelze und somit Segregationen vorliegen.

### KURZBESCHREIBUNG DER FIGUREN

Die beigefügten Zeichnungen zeigen in rein schematischer Weise in
- Figur 1: eine Schnittansicht durch einen Teil eines Dichtrings nach dem Stand der Technik;
- Figur 2: eine Schnittansicht eines Teils eines Dichtrings gemäß der Darstellung der Figur 1, der nach der Erfindung hergestellt worden ist; und in
- Figur 3: eine Detailansicht des Dichtrings aus Figur 2.

### AUSFÜHRUNGSBEISPIEL

Weitere Vorteile, Kennzeichen und Merkmale der vorliegenden Erfindung werden bei der nachfolgenden detaillierten Darstellung eines Ausführungsbeispiels deutlich. Allerdings ist die Erfindung nicht auf das beschriebene Ausführungsbeispiele beschränkt.

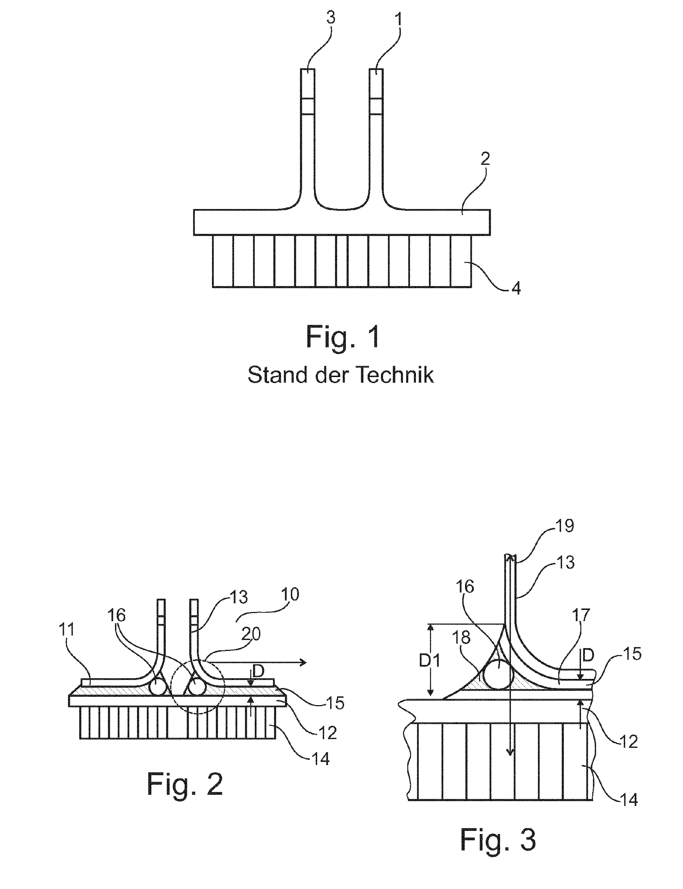

Die Figur 1 zeigt einen Teil eines bekannten Dichtrings für Flugtriebwerke, wie er im Stand der Technik verwendet wird. Der Dichtring 1 umfasst einen Tragring 2, an dem einerseits ein gelötetes Wabenband 4 zur Ausbildung des Dichtbereichs und andererseits Halteringe 3 angeordnet sind. Der Tragring 2 und die Halteringe 3 können durch einen geschmiedeten Ring gebildet sein, der durch Drehen in die Endform gebracht wird. Alternativ können die Halterringe 3 durch Stumpfnahtschweißen angeordnet werden. Durch die Fertigung aus dem vollen Material ist Fertigung material- und kostenintensiv.

Deshalb wird nach der vorliegenden Erfindung ein Dichtring 10 vorgeschlagen, der aus entsprechenden Blechelementen aufgebaut ist, die durch Löten miteinander verbunden sind.

Die Figur 2 zeigt einen erfindungsgemäßen Dichtring 10 bei dem ein Tragring 12 wiederum ein gelötetes Wabenband 14 zur Ausbildung eines Dichtbereichs aufweist. Die Halteringe 13 werden bei dem erfindungsgemäßen Dichtring 10 durch im Querschnitt L-Förmige Blechringe gebildet, die mittels einer Lötverbindung 15 an dem Tragring 12 angeordnet sind. Zwischen dem jeweiligen Schenkel der L-Förmigen Halteringe 13, die am Tragring 12 angeordnet werden, und dem Tragring 12 ist ein Lötspalt mit einer Lötspaltbreite D ausgebildet, die im Wesentlichen über den Bereich der parallelen Anordnung der der Oberflächen der Halterringe 13 gegenüber der Oberfläche des Tragrings 12 gleich bleibt und die Dimension D aufweist. Lediglich in den Bereichen, in denen der Übergang von einem Schenkel zum anderen Schenkel des L-förmigen Halterings 13 erfolgt und entsprechend die Querschnittsform der Halteringe 13 eine Krümmung 20 aufweist, so dass sich der Abstand der Oberfläche des Tragrings 12 zu der Oberfläche der jeweiligen Halterringe 13 vergrößert, vergrößert sich entsprechend auch die Lötspaltbreite.

Wie in der Detailansicht der Figur 3 gezeigt, wird die Lötspaltbreite von der Größe D auf die Größe D₁ vergrößert. Durch die vergrößerte Lötspaltbreite D₁ und die entsprechend vergrößerte Menge an Lot, die in dem vergrößerten Lötspalt aufgenommen wird, kommt es bei der Erstarrung des Lots im Lötspalt zu Bereichen, die im Wesentlichen isotherm erstarren und als Bänder entlang der Oberflächen der zu verbindenden Bauteile, also des Tragerings 12 und der Halteringe 13, ausgebildet sind. Die Bereiche der isothermen Erstarrung sind in der Figur 3 mit dem Bezugszeichen 17 dargestellt. Im Bereich der Aufweitung des Lötspalts auf die Lötspaltbreite D₁ hat die Lötspaltbreite jedoch eine Dimension erreicht, in der ein vollständiges isothermes Erstarren des Lots nicht mehr möglich ist und es beim Erstarren des Lots zu einer Segregation kommen kann. Dieser Bereich mit der erstarrten Restschmelze, in dem das Lot auf Grund der späteren Erstarrung bei tieferen Temperaturen mit einer gegenüber dem früher bei höheren Temperaturen erstarrtem Lot unterschiedlicher Zusammensetzung erstarrt, kann es bei entsprechender Zusammensetzung des Lots zur Anreicherung von Hartstoffphasen kommen, die Ausgangspunkt für eine Rissbildung sein können, wenn beispielsweise, wie in Figur 3 gezeigt, die Lötverbindung auf Zug beansprucht wird. Der Doppelpfeil 19 zeigt beispielhaft die Zugbelastung an.

Um die Ausbildung einer Segregation in einem erstarrten Restschmelzenbereich 18 des Lots zu vermeiden, wird erfindungsgemäß in dem Bereich, in dem die Erstarrung einer Restschmelze und eine Segregation des Lots zu erwarten ist, ein Füllstoff in Form eines Fülldrahts 16 eingelegt, der aus einem Material gebildet ist, welches einen höheren Schmelzpunkt als das Lot aufweist und somit bei der Herstellung der Lötverbindung nicht aufschmilzt. Durch den Füllstoff wird die effektive Lötspaltbreite, die mit Lot angefüllt werden muss, reduziert, so dass das Lot weitgehend isotherm erstarren kann. Insbesondere im Bereich des Verlaufs des Kraftflusses bei einer Zugbelastung kann durch die Anordnung eines Füllstoffs die Ausbildung eines Bereichs mit erstarrter Restschmelze und Segregation sowie die Ausbildung von Bereichen mit hohen Konzentrationen von Hartstoff-Partikeln vermieden werden, so dass die Bildung und Einleitung von Rissen ebenfalls vermieden und somit die Festigkeit der Lötverbindung erhöht werden kann.

Obwohl die vorliegende Erfindung anhand des Ausführungsbeispiels deutlich beschrieben worden ist, ist der Erfinder nicht auf dieses Ausführungsbeispiels beschränkt, sondern es sind Abwandlungen in der Weise möglich, dass einzelne Merkmale weggelassen oder andersartige Kombinationen von Merkmalen vorgenommen werden, solange der Schutzbereich der beigefügten Ansprüche nicht verlassen wird.

## Patentansprüche

1. Verfahren zur Herstellung einer Lötverbindung zwischen einem ersten Bauteil (12) und einem zweiten Bauteil (13) mit einem Lötspalt zwischen den Bauteilen, der sich zumindest teilweise parallel zu den zu verbindenden Oberflächen der Bauteile erstreckt und durch Lot gefüllt wird, wobei das Lot geschmolzen wird und wieder erstarrt und wobei der Lötspalt mindestens einen Bereich aufweist, in dem das geschmolzene Lot zuletzt erstarren und einen Bereich (18) mit erstarrter Restschmelze bilden wird,
**dadurch gekennzeichnet, dass**
der Bereich mit erstarrter Restschmelze bestimmt wird und dass in dem bestimmten Bereich mit erstarrter Restschmelze ein Füllstoff (16) angeordnet wird.

2. Verfahren nach Anspruch 1,
**dadurch gekennzeichnet, dass**
der Füllstoff (16) in Form eines massiven Fülldrahts, eines Drahtbündels oder eines Faserbündels in die Lötverbindung eingebracht wird.

3. Verfahren nach Anspruch 1 oder 2,
**dadurch gekennzeichnet, dass**
der Füllstoff (16)ein metallischer Stoff ist, der insbesondere einen höheren Schmelzpunkt als das Lot aufweist.

4. Verfahren nach einem der vorhergehenden Ansprüche,
**dadurch gekennzeichnet, dass**
der Füllstoff (16) in Aufweitungen des Lötspalts angeordnet ist.

5. Verfahren nach einem der vorhergehenden Ansprüche,
**dadurch gekennzeichnet, dass**
der Füllstoff (16) in einem Bereich des Lötspalts am Ende des Lötspalts angeordnet wird, der sich dreiecksförmig oder trichterförmig zwischen einer ersten Oberfläche des ersten Bauteils (12) und einer zweiten Oberfläche des zweiten Bauteils (13) aufweitet, wobei zumindest eine der ersten oder zweiten Oberfläche eine Krümmung aufweist, so dass die erste Oberfläche auf einer Seite der Krümmung im Wesentlichen parallel und gegenüberliegend zur zweiten Oberfläche und auf der anderen Seite der Krümmung im Wesentlichen quer oder entgegengesetzt zur zweiten Oberfläche verläuft.

6. Verfahren nach einem der vorhergehenden Ansprüche,
**dadurch gekennzeichnet, dass**
der Füllstoff (16) in Bereichen angeordnet wird, in denen die Lötverbindung auf Zug beansprucht wird.

7. Verfahren nach einem der vorhergehenden Ansprüche,
**dadurch gekennzeichnet, dass**
der Füllstoff (16) in der Richtung der Lötspaltbreite größer dimensioniert ist als die geringste Lötspaltbreite oder die Lötspaltbreite benachbart zum Füllstoff.

8. Verfahren nach einem der vorhergehenden Ansprüche,
**dadurch gekennzeichnet, dass**
der Füllstoff (16) zur Vermeidung oder Verringerung einer Segregation des Lots eingesetzt wird.

9. Lötverbindung, insbesondere hergestellt nach einem Verfahren nach einem der vorhergehenden Ansprüche, zwischen einem ersten Bauteil (12) und einem zweiten Bauteil (13) mit einem Lötspalt zwischen den Bauteilen, der sich zumindest teilweise parallel zu den zu verbindenden Oberflächen der Bauteile erstreckt und durch Lot gefüllt ist, wobei das Lot im Lötspalt einen Bereich einer erstarrten Restschmelze aufweist,
**dadurch gekennzeichnet, dass**
zumindest teilweise im Bereich der erstarrten Restschmelze ein Füllstoff (16) angeordnet ist.

10. Lötverbindung, insbesondere hergestellt nach einem Verfahren nach einem der Ansprüche 1 bis 8, zwischen einem ersten Bauteil (12) und einem zweiten Bauteil (13) mit einem Lötspalt zwischen den Bauteilen, der sich zumindest teilweise parallel zu den zu verbindenden Oberflächen der Bauteile erstreckt und durch Lot gefüllt ist, wobei der Lötspalt, in dem Lot aufgenommen ist, Bereiche mit unterschiedlicher Spaltbreite zwischen dem ersten und zweiten Bauteil aufweist,
**dadurch gekennzeichnet, dass**
zumindest teilweise in Bereichen mit einer Lötspaltbreite, die größer ist als die überwiegende in der Lötverbindung vorliegende Lötspaltbreite oder als eine benachbarte Lötspaltbreite, ein Füllstoff (16) zur Reduzierung der Lötspaltbreite angeordnet ist.

11. Lötverbindung nach Anspruch 10,
**dadurch gekennzeichnet, dass**
der Füllstoff (16) so dimensioniert ist, dass die verbleibende Breite des mit Lot gefüllten Lötspalts im Bereich des Füllstoffs im Wesentlichen gleich zu benachbarten Bereichen der Lötverbindung ohne Füllstoff ist und/oder so dimensioniert ist, dass ein weitgehend isothermes Erstarren des Lots ermöglicht wird.

12. Dichtring für ein Flugtriebwerk, der aus mehreren Blechen gebildet ist, die untereinander durch Löten verbunden sind und mindestens eine Lötverbindung nach einem der Ansprüche 9 bis 11 aufweisen und/oder bei denen mindestens eine Lötverbindung durch ein Verfahren nach einem der Ansprüche 1 bis 8 hergestellt ist.
